# EUROPÄISCHE PATENTSCHRIFT

(11) **EP 2 193 005 B1**
(45) Veröffentlichungstag und Bekanntmachung des Hinweises auf die Patenterteilung: **02.08.2017**
(21) Anmeldenummer: 08785666.2
(22) Anmeldetag: 22.08.2008
(51) Int. Cl.: B23K 11/24

(54) **VERFAHREN ZUM BETRIEB EINER WIDERSTANDSSCHWEISSVORRICHTUNG**
METHOD FOR OPERATING A RESISTANCE WELDING DEVICE
PROCÉDÉ DE FONCTIONNEMENT D'UN DISPOSITIF DE SOUDAGE PAR RÉSISTANCE

(30) Priorität: 07.09.2007 DE 202007042771 U
(43) Veröffentlichungstag der Anmeldung: 09.06.2010
(73) Patentinhaber: Robert Bosch GmbH, 70469 Stuttgart (DE)
(72) Erfinder: SCHUMANN, Fritz-Joachim, 21244 Buchholz (DE); SCHOLZ, Reinhard, 64711 Erbach (DE); KLINGER, Thomas, 64747 Breuberg (DE)
(74) Vertreter: Thürer, Andreas
(86) Internationale Anmeldenummer: PCT/EP2008/006903
(87) Internationale Veröffentlichungsnummer: WO 2009/033555

(56) Entgegenhaltungen:
- DE-A1- 4 205 599
- US-A- 3 229 161
- US-A- 3 236 996
- US-A- 3 553 416
- US-A- 5 229 567
- US-B1- 6 215 086

## Beschreibung

Die Erfindung beschreibt ein Verfahren zum Betrieb einer Widerstandsschweißvorrichtung, sowie eine Widerstandsschweißvorrichtung und eine Ansteuervorrichtung. Beim Widerstandsschweißen mit Gleichstrom werden sehr hohe Ströme gefordert, die im Bereich von mehreren Kiloampere liegen. Zur Erzeugung dieser Ströme werden üblicherweise Transformatoren verwendet, welche primärseitig mittels einer Vollbrücke angesteuert werden und sekundärseitig mittels nachgeschaltetem Diodengleichrichter die Schweißzangen mit Strom versorgen.

US-A- 5 229 567 beschreibt ein Schaltsteuersystem zum Steuern eines Inverters eines Punktschweißungsgeräts. Das Gerät weist Schweißelektroden und einen mit den Schweißelektroden verbundenen Schaltkreis auf, um die Schweißelektroden mit einem Schweißstrom zu versorgen. Der Schaltkreis umfass eine Mehrzahl parallel geschalteter Gleichrichter auf.

US-B1-6 215 086 beschreibt eine Steuerung zum Widerstandsschweißen mittels der einen im Wesentlichen konstanter Pegel eines Wechselstroms bereitstellt.

Die Verwendung von Diodengleichrichtern hat den Nachteil, dass aufgrund des Durchlasswiderstandes der Dioden hohe Verlustleistungen auftreten. Die Aufgabe der Erfindung besteht darin eine Widerstandsschweißvorrichtung und ein Verfahren zum Betrieb dieser Widerstandsschweißvorrichtung anzugeben, mittels dessen der Wirkungsgrad gegenüber den aus dem Stand der Technik bekannten Lösungen merklich verbessert wird. Diese Aufgabe wird durch ein Verfahren gemäß Anspruch 1, eine Widerstandsschweißvorrichtung gemäß Anspruch 6 und eine Ansteuervorrichtung gemäß Anspruch 9 gelöst.

Erfindungsgemäß wird hierzu eine Widerstandsschweißvorrichtung verwendet, welche einen Schweißtransformator mit erster und zweiter miteinander gekoppelter Sekundärwicklung und eine Primärwicklung umfasst und welcher einen Synchrongleichrichter umfasst, wobei der Synchrongleichrichter einen ersten und einen zweiten Gleichrichterzweig umfasst und wobei die Gleichrichterzweige jeweils mittels der ersten und der zweiten Sekundärwicklung ansteuerbar sind.

Die Vollbrücke kann hierzu Beispielsweise mehrere IGBTs umfassen, die zu einer Brückenschaltung angeordnet sind, wobei die Primärwicklung zwischen beiden Brückenzweigen angeordnet ist, und mittels abwechselnder Ansteuerung der Transistoren mit Strom beaufschlagt wird. Sekundärseitig wird der Synchrongleichrichter verwendet. Dieser wird mittels der Sekundärwicklungen derart angesteuert, dass an den Schweißzangen der geforderte Gleichstrom auftritt. Synchrongleichrichter sind bekannt in Verbindung mit Schaltnetzteilen. Hierbei werden jedoch wesentlich kleinere Ströme als beim Schweißen geschaltet. Verwendet man nun Synchrongleichrichter in Verbindung mit Widerstandsschweißanlagen, so erreicht man aufgrund des niedrigen Durchlasswiderstandes der dort verwendeten Metalloxidfeldeffekttransistoren und der damit vorhandenen Ansteuerprinzipien eine drastische Reduzierung der Verlustleistung im Vergleich mit Diodengleichrichtern, welche höhere Durchlasswiderstände aufweisen. Hierdurch erzielt man einen geringeren Energieverbrauch und eine Reduktion der Wärmeentwicklung, wodurch sich wiederum der erforderliche Kühlaufwand reduziert.

Dies führt zur Einsparung von Material, Kosten und Energie. Aufgrund der möglichen Parallelschaltung von mehreren Metalloxidfeldeffekttransistoren in den Synchrongleichrichterzweigen können Ströme bis zu 15 kA oder höher geschaltet werden, wobei sich die Verlustleistung gegenüber Diodengleichrichtern um ca. 70 % reduziert.

Vorteilhafterweise umfasst die Widerstandsschweißvorrichtung eine Stromregelung, welche mittels eines im Primärstromkreis der Primärwicklung oder im Sekundärstromkreis der Sekundärwicklung erfassten Stromes betrieben ist und die Ansteuerung der Gleichrichterzweige erfolgt mit einer Frequenz im Bereich von 1 kHz bis 20 kHz, insbesondere im Bereich zwischen 1 kHz bis 10 kHz. Dies ermöglicht den Bau von Transformatoren mit geringem Bauvolumen und verbessert die Regelbarkeit des Schweißstromes aufgrund der reduzierten Taktperioden (kürzere Regelzeiten). Die Qualität des einzelnen Schweißpunktes kann daher besser beeinflusst werden.

Der Ansteuerimpuls für die Synchrongleichrichterfeldeffekttransistoren fällt üblicherweise zeitlich im wesentlichen mit der aktiven Stromphase der Transformatorwicklungen zusammen. Das heißt die Metalloxidfeldeffekttransistoren des Synchrongleichrichters werden im wesentlichen zeitgleich mit den Schaltern (IGBT) der Vollbrücke angesteuert. Gespeicherte Energie kann zu den Zeitpunkten, zu denen keine Ansteuerung erfolgt, ausschließlich über die Bodydioden der Metalloxidfeldeffekttransistoren des Synchrongleichrichters abfließen. Der Grund hierfür ist, dass sämtliche Metalloxidfeldeffekttransistoren des Synchrongleichrichters immer dann gesperrt sind, wenn der Schweißtransformator primärseitig gerade nicht angesteuert wird oder anders formuliert, die Metalloxidfeldeffekttransistoren des Synchrongleichrichters sind immer dann gesperrt, wenn auch der Transformator keine Leistung überträgt.

Der Nachteil dieser Lösung liegt darin, dass beim Gleichstromwiderstandsschweißen im Mittelfrequenzbereich das Einspeichern großer Energiemengen im Bereich von 30 bis 120 Wattsekunden während der aktiven Stromzeit in die Sekundärinduktivität, welche durch die Arme der Punktzange gebildet wird, eingelagert werden. Basis dieser Energiemenge stellt der sogenannte Dumpingstrom dar. Dieser tritt während der Phasen, während der weder der Transformator, noch der Synchrongleichrichter angesteuert werden, aufgrund des induktiven Verhaltens der Schweißelektrodenzuleitungen synchrongleichrichterseitig weiter auf. Um den Strom aufrecht zu erhalten, müssen die Schwellspannungen (0,8 bis 1 Volt) der Bodydioden der Metalloxidfeldeffekttransistoren überwunden werden. Aufgrund der zwar geringen Schwellspannung um 1 Volt, der jedoch sehr hohen Ströme im kA-Bereich, entstehen Verlustleistungen, welche im Kilowattbereich liegen. Diese Verlustleistung wird von den Feldeffekttransistoren des Synchrongleichrichters in Wärme umgesetzt, was den Wirkungsgrad der Anordnung beträchtlich reduziert.

Die Erfindung bewirkt eine zusätzliche Reduzierung der Verlustleistung unter Verwendung eines erfindungsgemäßen Schweißtransformators, welcher eine erste und eine zweite miteinander gekoppelte Sekundärwicklung (Mittelpunktschaltung) und eine Primärwicklung aufweist, sowie einen Synchrongleichrichter in Verbindung mit dem erfindungsgemäßen Ansteuerverfahren.

Die Ansteuerung des Synchrongleichrichters erfolgt mittels einer Ansteuervorrichtung derart, dass der unter Berücksichtigung des Wickelsinns der miteinander korrespondierenden Wicklungen des Primärkreises und des Sekundärkreises angesteuerte Gleichrichterzweig mit der der aktuellen Ansteuerung entgegen gesetzten Schweißelektrodenpolarität immer nur dann gesperrt wird, wenn die Primärwicklung angesteuert wird.

Die Ansteuerung wird hiermit so realisiert, dass die Feldeffekttransistoren des Synchrongleichrichterzweiges immer geöffnet sind und gesperrt werden kurz vor der aktiven Phase des Transformators, wobei immer derjenige Feldeffekttransistor gesperrt wird, der einen Kurzschluss während dieser aktiven Phase im Sekundärkreis darstellen würde. In diesem Fall kann die zuvor genannte gespeicherte Energiemenge über die Drain - Source - Strecke der Feldeffekttransistoren abfließen, wodurch sich der Wirkungsgrad erheblich erhöht und sich damit die Verlustleistung reduziert. In diesem Falle muss nicht mehr die Quellspannung von 0,8 Volt - 1 Volt der Bodydiode überwunden werden, um den Dumpingstrom abzubauen. Es muss lediglich der Widerstand RDSon der Metalloxidfeldeffekttransistoren des Synchrongleichrichters überwunden werden, welcher durch Parallelschaltung nur einige Mikroohm beträgt und auch bei Beaufschlagung mit Strömen im kA-Bereich nur eine entsprechend kleine Verlustleistung herbeiführt.

Die Ansteuerung des Synchrongleichrichters erfolgt somit entgegen der sonst üblichen Praxis. Eine erfindungsgemäße Sperrung einzelner synchrongleichrichterseitigen Metalloxidfeldeffekttransistoren erfolgt nur kurz vor der aktiven Leitphase des Trafos. Kurz nach Beendigung der Leitphase sind alle Feldeffekttransistoren wieder geöffnet. Damit fließen somit die aktiven Ströme, wie auch die Freilaufströme, über den niederohmigen Einschaltwiderstand und nicht über die Bodydioden, wodurch sich Energieeinsparungen während der Leit- und der Sperrphase ergeben. Die Ansteuerung des Gleichrichterzweiges erfolgt vorzugsweise innerhalb weniger Mikrosekunden vor der Ansteuerung des Primärkreises.

Vorzugsweise sind sowohl die Komponenten des ersten als auch des zweiten Gleichrichterzweiges symmetrisch ausgebildet und der Anschluss des Synchrongleichrichters an den zweiteiligen Sekundärkreis ist mittels einer Mittelanzapfung realisiert, wobei die Ansteuerung des ersten und des zweiten Gleichrichterzweiges mittels im wesentlichen symmetrischer Ansteuerimpulse erfolgt. Es ist dabei sehr wichtig, dass beide mittels der Ansteuerimpulse erzeugten Halbwellen zur Ansteuerung des Synchrongleichrichters in etwa die gleichen Verhältnisse hardwareseitig vorfinden, ansonsten würde durch eine Aufsummierung von Unsymmetrien der Trafo in Sättigung laufen.

Ganz besonders bevorzugt umfasst die Ansteuervorrichtung eine Steuerlogik, einen Pulsweitengenerator und eine Gatterschaltung, welche derart zusammenwirken, dass die weiter oben genannten Ansteuerimpulse erzeugt werden. Es ist somit möglich die Ansteuerung preiswert zu realisieren. Man benötigt weder vorgefertigte integrierte Schaltungen noch besonders komplexe Bauteile. Es genügt die Impulsaufbereitung mittels der erfindungsgemäßen Gatterschaltungen zu realisieren, wobei die Überlappungszeiten der Impulse mit einem einzigen RC-Glied realisiert werden können. Dies hat zusätzlich den Vorteil, dass für beide Kanäle, welche sowohl den ersten als auch den zweiten Zweig des Synchrongleichrichters ansteuern, ein identisches RC-Glied verwendet werden kann, so dass Temperaturänderungen oder durch Alterung verursachte Auswirkungen auf die Impulsform stets auf beide Kanäle wirken und sich somit gegenseitig ausgleichen.

Vorteilhafterweise wird die Ansteuerung mittels eines integrierten Bausteines realisiert, beispielsweise in einer programmierbaren Logik oder eines FPGA - Bausteines. Die Schaltung wird damit kompakt und ist leicht verbaubar.

Eine gemäß der Erfindung arbeitende Widerstandsschweißvorrichtung bzw. ein erfindungsgemäßes Verfahren hat den Vorteil, dass im Vergleich mit aus dem Stand der Technik bekannten Lösungen ein höherer Wirkungsgrad erzielt wird. Außerdem ist es möglich, mittels dieser Lösung den Arbeitstakt des Synchrongleichrichters zu erhöhen und somit Widerstandsschweißvorrichtungen auch im Frequenzbereich über 5 Kilohertz zu realisieren. Außerdem stellt die Erfindung eine Alternative Lösung gegenüber bekannten Diodengleichrichtern dar, was zu einer kompakten Schweißsteuerung mit geringer Verlustleistung führt. Dementsprechend gering sind die Anforderungen an die Kühlung der Vorrichtung, was zusätzlich zu Gewichts- und Kosteneinsparungen führt.
Figur 1 zeigt die zur Realisierung einer erfindungsgemäßen Widerstandsschweißvorrichtung erforderliche Hardware.
Figur 2 zeigt, das Impulsschema für die Ansteuerung des Synchrongleichrichters und des Transformators, welche bereits aus Figur 1 bekannt sind.
Figur 3 zeigt, die hardwaremäßige Realisierung der Ansteuerung mittels elektronischer Schalter (Gatter).

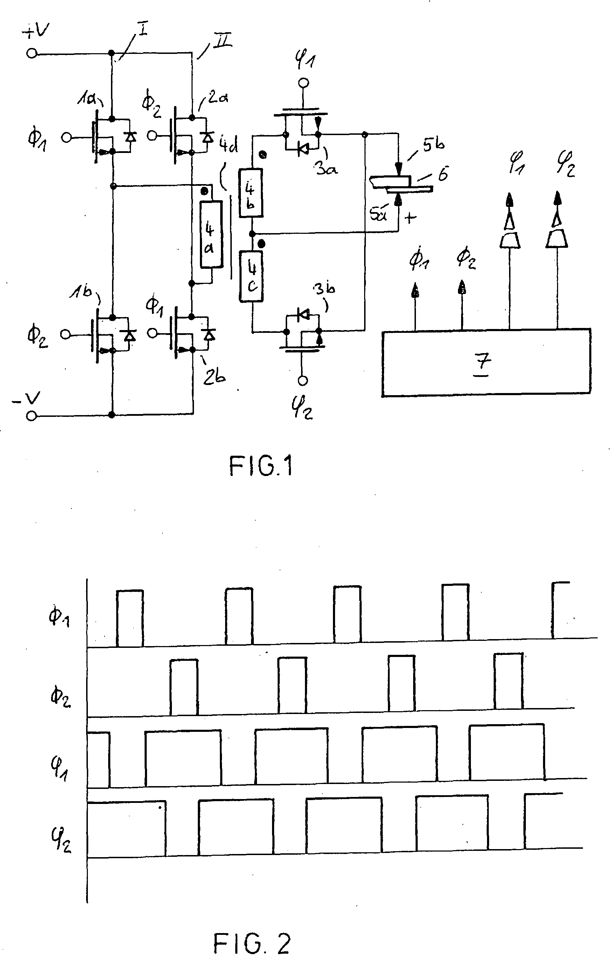

In Figur 1 ist gezeigt, eine Vollbrücke mit einem Synchrongleichrichter. Beide sind in eine Widerstandsschweißanlage eingebaut (nicht gezeigt). Die Vollbrücke ist links dargestellt, sie umfasst zwei Brückenzweige I, II. Beide Zweige liegen an einer Gleichspannung V+, V-. Jeder Zweig umfasst zwei Schalter (jeweils IGBT oder Leistungs MosFet) 1a, 1b bzw. 2a, 2b. Die Transistoren 1a und 2b werden mittels der Impulsfolge φ1 und die Transistoren 2a und 1b werden mittels der Impulsfolge φ2 angesteuert. Im Brückenzweig der Anordnung befindet sich die Primärwicklung 4a des Schweißtransformators. Auf der rechten Seite der Figur 1 ist der Synchrongleichrichter gezeigt. Dieser umfasst die beiden Sekundärwicklungen 4b und 4c des Schweißtransformators. Beide Wicklungen 4b,c sind in Serie geschaltet und haben eine Mittelanzapfung. An der Mittelanzapfung ist in diesem Beispiel diejenige Schweißelektrode 5a angeschlossen, welche während des Schweißvorganges positives Potential (+) aufweisen soll. Es könnte auch diejenige Schweißelektrode angeschlossen sein, welche während des Betriebes der Widerstandsvorrichtung negatives Potential (- ) aufweisen soll. Die Schalter 3a, 3b wären dann entsprechend fachmännisch anders anzusteuern und anzuordnen.

An den jeweiligen anderen Anschlüssen ist in diesem Beispiel (positives Potential an der Mittelanzapfung) diejenige Schweißelektrode 5b angeschlossen, welche während des Schweißvorganges negatives Potential (-) aufweisen soll. Zwischen den beiden Schweißelektroden 5a,b ist ein zweiteiliges Werkstück 6 gezeigt, welches mittels des erfindungsgemäßen Widerstandsschweißverfahrens zu verbinden ist. Zur Ansteuerung der Schweißelektroden befinden sich außerdem Feldeffekttransistoren 3a, 3b in den Zweigen des Synchrongleichrichters, welche mittels der Impulsfolgen φ1 bzw. φ2 angesteuert werden. Weiter rechts im Bild ist schematisch ein integrierter oder diskreter Schaltkreis 7 angedeutet, welcher sowohl die Ansteuerimpulsfolgen für die primärseitige Ansteuerung der Wicklungen mittels der Vollbrückenschalter 1a,b, 2a,b liefert, als auch die Ansteuerimpulsfolgen zur Ansteuerung der Transistoren 3a,b des Synchrongleichrichters.

In Figur 2 sind die Impulsfolgen φ1, φ2 und φ1, φ2 zur Ansteuerung der Vollbrückenschalter 1a,b, 2a,b und des Synchrongleichrichters 3a,b schematisch dargestellt. Die im Impulsdiagramm gezeigten oberen beiden Impulsfolgen φ1 und φ2 stellen die Impulsfolgen zur Ansteuerung der Schalter 1a,b,2a,b der Vollbrücke dar. Die im Impulsdiagramm gezeigten unteren beiden Impulsfolgen ϕ1 und ϕ2 stellen die Impulsfolgen zur Ansteuerung des Metalloxidfeldeffekttransistoren 3a,b des Synchrongleichrichters dar. Schaltet nun ein Impuls φ1 die aus Figur 1 bekannten Schalter 1a und 2b leitend, so bildet sich an der Primärwicklung 4a an dem mittels des Punktes gekennzeichneten Anschluss ein positive Potential (+) aus. Dieses positive Potential (+) wird aufgrund der magnetischen Kopplung in den Sekundärkreis übertragen und bewirkt an den Sekundärwicklungen 4b,c ebenfalls an der mittels des Punktes gekennzeichneten Anschlussstelle ein positives Potential, welches an der Schweißelektrode 5a anliegt, während an der Schweißelektrode 5b negatives Potential anliegt.

Diese Potentialverteilung wird erreicht, indem man den Feldeffekttransistor 3b des Synchrongleichrichters mittels der Impulsfolge ϕ2 leitend schaltet, während bei der Ansteuerung der Schalter 1a und 2b der Vollbrücke der Transistor 3a des Synchrongleichrichters mittels der Impulsfolge ϕ1 gesperrt wird. Im umgekehrten Fall, wenn also die Transistoren 2a und 1b der Vollbrücke mittels der Impulse φ2 leitend geschaltet werden, wird der Feldeffekttransistor 3b des Synchrongleichrichters mittel der Impulsfolge ϕ2 gesperrt und der Transistor 3a des Synchrongleichrichters mittels der Impulsfolge ϕ1 leitend geschaltet, so dass sich aufgrund der magnetischen Kopplung zwischen der Primärwicklung 4a und der Sekundärwicklung 4b an der Schweißelektrode 5b ein negatives Potential ausbildet, während sich an der Schweißelektrode 5a ein positives Potential ausbildet. Der hohe Strom im Bereich von mehreren kA-Bereich zwischen den beiden Schweißelektroden 5a und 5b bewirkt, dass das zweiteilige Materialstück 6 sich verflüssigt und vermengt, wodurch eine nicht lösbare Verbindung entsteht.

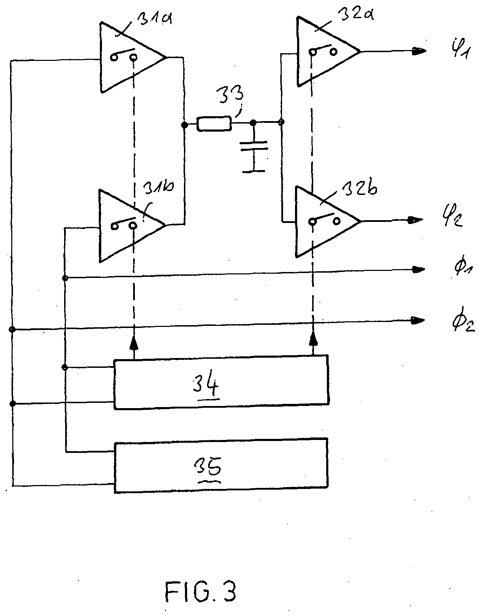

Figur 3 zeigt beispielhaft eine Möglichkeit, wie die Ansteuerung für die Vollbrückenschalter 1a,b und 2a,b und die Synchrongleichrichterfeldeffekttransistoren 3a,b realisiert werden könnte. Es ist ein Pulsweitenmodulator 35 gezeigt, welcher die Impulse erzeugt. Diese Impulse werden einer Steuerlogik 34 zugeführt, wobei die Steuerlogik 34 wiederum mehrere Gatterschaltungen 31a, 31b, 32a und 32b ansteuert. Während der Pulsweitenmodulator 35 unmittelbar die zur Ansteuerung der Vollbrücke erforderlichen Impulsfolgen φ1 und φ2 liefert, werden die zur Ansteuerung des Synchrongleichrichters erforderlichen Impulsfolgen ϕ1, ϕ2 mittels der Gatterschaltungen 31a, 31b, 32a, 32b erzeugt und aus den vom Pulsweitenmodulator 35 generierten Impulsfolgen φ1 und φ2 abgeleitet. Die Gatter 31a, 31b, 32a, 32b sind mittels der Steuerlogik ansteuerbar und die Überlappungszeiten der Impulse werden mit einem einzigen RC-Glied 33 realisiert. Dieses RC-Glied ist für beide Impulsfolgen ϕ1, ϕ2 relevant, so dass sich sich Temperaturänderungen, welche die charakteristischen Größen wie Kapazität oder Widerstand des RC-Gliedes beeinflussen könnten, gleichmäßig auf beide Kanäle ϕ1, ϕ2 auswirken und somit sich gegenseitig eliminieren. Es entstehen damit zwischen beiden Impulsfolgen ϕ1 und ϕ2 keinerlei temperaturabhängige Laufzeitunterschiede.

Die in Figur 1 bis 3 gezeigten Lösungen stellen lediglich beispielhafte Aspekte der Erfindung dar. Es besteht jederzeit die Möglichkeit die vorhandenen Schaltungen durch alternative Schaltungen, die aus dem Stand der Technik bekannt sind, oder durch äquvialente Lösungen (z.B. vertauschte Polarität an den Schweißzangen) zu modifizieren.

## Patentansprüche

1. Verfahren zum Betrieb einer Widerstandsschweißvorrichtung mit einem Schweißtransformator, welcher eine erste und eine zweite miteinander gekoppelte Sekundärwicklung (4b,c) und eine Primärwicklung (4a) umfasst sowie einem Synchrongleichrichter, welcher einen ersten und einen zweiten Gleichrichterzweig (3a, 3b) umfasst, welcher jeweils mittels der ersten und der zweiten Sekundärwicklung (4b,c) angesteuert ist und welcher eine erste und zweite Schweißelektrode (5a,b) mit Schweißstrom versorgt, wobei jeder Gleichrichterzweig (3a, 3b) einen Transistor umfasst und die Ansteuerung der Transistoren des Synchrongleichrichters (3a,3b) mittels einer Ansteuervorrichtung (7) derart erfolgt, dass der unter Berücksichtigung des Wickelsinns der miteinander korrespondierenden Wicklungen des Primärkreises (4a) und des Sekundärkreises (4b,c) angesteuerte Gleichrichterzweig (3a,b) mit der der aktuellen Ansteuerung entgegen gesetzten Schweißelektrodenpolarität (5a,b) immer nur dann gesperrt wird, wenn die Primärwicklung (4a) angesteuert wird.

2. Verfahren nach Anspruch 1, wobei der Gleichrichterzweig (3a,b) mit der der aktuellen Ansteuerung entgegen gesetzten Schweißelektrodenpolarität (5a,b) im wesentlichen unmittelbar vor der Ansteuerung der Primärwicklung (4a) gesperrt wird, vorzugsweise innerhalb weniger Mikrosekunden vor der Ansteuerung der Primärwicklung (4a).

3. Verfahren nach einem der vorherigen Ansprüche, wobei sowohl die Komponenten des ersten als auch des zweiten Gleichrichterzweiges (3a,3b) symmetrisch ausgebildet sind und der Anschluss des Synchrongleichrichters (3a,3b) an den zweiteiligen Sekundärkreis (4b,c) mittels einer sekundärseitigen Mittelanzapfung des Schweißtransformators realisiert ist, wobei die Ansteuerung des ersten und des zweiten Gleichrichterzweiges (3a,3b) mittels im wesentlichen symmetrischer Impulse erfolgt.

4. Verfahren nach einem der vorherigen Ansprüche, wobei die Ansteuervorrichtung (7) eine Steuerlogik (34), einen Pulsweiten-Generator (35) und eine Gatterschaltung (31a,b und 32a,b) umfasst, welche derart zusammenwirken, dass zur Ansteuerung Impulse erzeugt werden.

5. Verfahren nach einem der vorherigen Ansprüche, wobei die Ansteuerung mittels eines integrierten Schaltkreises oder mittels diskreter Bauteile erfolgt.

6. Widerstandsschweißvorrichtung mit einem Schweißtransformator, welcher eine erste und eine zweite miteinander gekoppelte Sekundärwicklung (4b,c) und einer Primärwicklung (4a) sowie einen Synchrongleichrichter (3a,b) umfasst, wobei der Synchrongleichrichter (3a,b) einen ersten und einen zweiten Gleichrichterzweig (3a, 3b) umfasst, wobei die Gleichrichterzweige (3a, 3b) jeweils mittels der ersten und der zweiten Sekundärwicklung (4b,c) ansteuerbar sind und wobei der Synchrongleichrichter (3a,b) eine erste und zweite Schweißelektrode (5a,b) mit Schweißstrom versorgt, wobei jeder Gleichrichterzweig (3a, 3b) einen Transistor umfasst.

7. Widerstandsschweißvorrichtung nach Anspruch 6, wobei eine Stromregelung umfasst ist, welche mittels eines im Primärstromkreis der Primärwicklung (4a) oder im Sekundärstromkreis der Sekundärwicklung (4b,c) erfassten Stromes betrieben ist.

8. Widerstandsschweißvorrichtung nach Anspruch 6 oder 7, wobei die Ansteuerung der Gleichrichterzweige (3a,b) mit einer Frequenz im Bereits von 1 kHz bis 20 kHz erfolgt, insbesondere im Bereich zwischen 1 kHz bis 10 kHz.

9. Ansteuervorrichtung, insbesondere integrierter Schaltkreis, zum Betrieb einer Widerstandsschweißvorrichtung mit einem Schweißtransformator, welcher eine erste und eine zweite miteinander gekoppelte Sekundärwicklung (4b,c) und eine Primärwicklung (4a) umfasst sowie einem Synchrongleichrichter, welcher einen ersten und einen zweiten Gleichrichterzweig (3a, 3b) umfasst, welcher jeweils mittels der ersten und der zweiten Sekundärwicklung (4b,c) angesteuert ist und welcher eine erste und zweite Schweißelektrode (5a,b) mit Schweißstrom versorgt, wobei jeder Gleichrichterzweig (3a, 3b) einen Transistor umfasst, wobei die Ansteuervorrichtung ausgebildet ist, um die Transistoren des Synchrongleichrichters (3a,3b) derart anzusteuern, dass der unter Berücksichtigung des Wickelsinns der miteinander korrespondierenden Wicklungen des Primärkreises (4a) und des Sekundärkreises (4b,c) angesteuerte Gleichrichterzweig (3a,b) mit der der aktuellen Ansteuerung entgegen gesetzten Schweißelektrodenpolarität (5a,b) immer nur dann gesperrt wird, wenn die Primärwicklung (4a) angesteuert wird.

## Claims

1. Method for operating a resistance welding device having a welding transformer, which comprises a first and a second secondary winding (4b, c), which are coupled to one another, and a primary winding (4a) and also a synchronous rectifier, which comprises a first and a second rectifier branch (3a, 3b), which are respectively activated by means of the first and second secondary winding (4b, c), and which supplies a first and a second welding electrode (5a, b) with welding current, each rectifier branch (3a, 3b) comprising a transistor and the activation of the transistors of the synchronous rectifier (3a, 3b) being performed by means of an activation device (7) in such a way that the rectifier branch (3a, b) activated with regard to the winding direction of the mutually corresponding windings of the primary circuit (4a) and the secondary circuit (4b, c) with the welding electrode polarity (5a, b) opposing that of the activation at the time is only ever blocked when the primary winding (4a) is activated.

2. Method according to Claim 1, the rectifier branch (3a, b) with the welding electrode polarity (5a, b) opposing that of the activation at the time being blocked essentially directly before the activation of the primary winding (4a), preferably within a few microseconds before the activation of the primary winding (4a).

3. Method according to one of the preceding claims, both the components of the first and the second rectifier branch (3a, 3b) being symmetrically formed and the connection of the synchronous rectifier (3a, 3b) to the two-part secondary circuit (4b, c) being realized by means of a secondary-side centre tap of the welding transformer, the activation of the first and the second rectifier branch (3a, 3b) taking place by means of essentially symmetrical pulses.

4. Method according to one of the preceding claims, the activation device (7) comprising a control logic (34), a pulse generator (35) and a gate circuit (31a, b and 32a, b), which interact in such a way that pulses for the activation are generated.

5. Method according to one of the preceding claims, the activation being performed by means of an integrated circuit or by means of discrete components.

6. Resistance welding device having a welding transformer, which comprises a first and a second secondary winding (4b, c), which are coupled to one another, and a primary winding (4a) and also a synchronous rectifier (3a, b), the synchronous rectifier (3a, b) comprising a first and a second rectifier branch (3a, 3b), the rectifier branches (3b, c) being respectively activatable by means of the first and second secondary winding (4b, c) and the synchronous rectifier (3a, b) supplying a first and a second welding electrode (5a, b) with welding current, each rectifier branch (3a, 3b) comprising a transistor.

7. Resistance welding device according to Claim 6, comprising a current control, which is operated by means of a current detected in the primary circuit of the primary winding (4a) or in the secondary circuit of the secondary winding (4b, c).

8. Resistance welding device according to Claim 6 or 7, the activation of the rectifier branches (3a, b) taking place at a frequency in the range from 1 kHz to 20 kHz, in particular in the range between 1 kHz and 10 kHz.

9. Activation device, in particular integrated circuit, for operating a resistance welding device having a welding transformer, which comprises a first and a second secondary winding (4b, c), which are coupled to one another, and a primary winding (4a) and also a synchronous rectifier, which comprises a first and a second rectifier branch (3b, c), which are respectively activated by means of the first and second secondary winding (4b, c) and which supplies a first and a second welding electrode (5a, b) with welding current, each rectifier branch (3a, 3b) comprising a transistor, the activation device being designed to activate the transistors of the synchronous rectifier (3a, 3b) in such a way that the rectifier branch (3a, b) activated with regard to the winding direction of the mutually corresponding windings of the primary circuit (4a) and the secondary circuit (4b, c) with the welding electrode polarity (5a, b) opposing that of the activation at the time is only ever blocked when the primary winding (4a) is activated.

## Revendications

1. Procédé de mise en fonctionnement d'un dispositif de soudage par résistance comportant un transformateur de soudage comprenant des premier et second enroulements secondaires (4b,c) couplés l'un à l'autre et un enroulement primaire (4a) ainsi qu'un redresseur synchrone qui comprend des première et secondes branches de redresseur (3a, 3b) qui sont respectivement excitées au moyen des premier et second enroulements secondaires (4b,c) et qui alimentent en courant de soudage des première et seconde électrodes de soudage (5a,b), dans lequel chaque branche de redresseur (3a, 3b) comprend un transistor et l'excitation des transistors du redresseur synchrone (3a, 3b) est effectuée au moyen d'un dispositif d'excitation (7) de manière à ce que la branche de redresseur (3a,b) excitée en tenant compte du sens d'enroulement des enroulements correspondant l'un à l'autre du circuit primaire (4a) et du circuit secondaire (4b,c) ne soit toujours bloquée par la polarité des électrodes de soudage (5a,b) opposées à celles de la commande actuelle que lorsque l'enroulement primaire (4a) est excité.

2. Procédé selon la revendication 1, dans lequel la branche de redresseur (3a,b) est bloquée avec la polarité d'électrode de soudage (5a, 5b) réglée en sens opposé à l'excitation actuelle sensiblement immédiatement avant l'excitation de l'enroulement primaire (4a), de préférence quelques microsecondes avant l'excitation de l'enroulement primaire (4a).

3. Procédé selon l'une quelconque des revendications précédentes, dans lequel les composants des première et seconde branches de redresseur (3a, 3b) sont réalisés de manière symétrique et le raccordement du redresseur synchrone (3a, 3b) au circuit secondaire en deux parties (4b,c) est réalisé au moyen d'une prise centrale côté secondaire du transformateur de soudage, dans lequel l'excitation des première et seconde branches de redresseur (3a, 3b) est effectuée au moyen d'impulsions sensiblement symétriques.

4. Procédé selon l'une quelconque des revendications précédentes, dans lequel le dispositif d'excitation (7) comprend une logique de commande (34), un générateur de largeur d'impulsion (35) et un circuit à portes (31a,b et 32a,b), qui coopèrent de manière à générer des impulsions à des fins d'excitation.

5. Procédé selon l'une quelconque des revendications précédentes, dans lequel l'excitation est effectuée au moyen d'un circuit de coupure intégré ou au moyen de composants discrets.

6. Dispositif de soudage par résistance comportant un transformateur de soudage comprenant des premier et second enroulements secondaires (4b,c) couplés l'un à l'autre et un enroulement primaire (4a) ainsi qu'un redresseur synchrone (3a,b), dans lequel le redresseur synchrone (3a,b) comprend des première et seconde branches de redresseur (3a, 3b), dans lequel les branches de redresseur (3a, 3b) peuvent respectivement être excitées au moyen des premier et second enroulements secondaires (4b,c) et dans lequel le redresseur synchrone (3a,b) alimente en courant de soudage des première et seconde électrodes de soudage (5a,b), dans lequel chaque branche de redresseur (3a, 3b) comprend un transistor.

7. Dispositif de soudage par résistance selon la revendication 6, dans lequel il est prévu une régulation de courant qui est mise en fonctionnement au moyen d'un courant détecté dans le circuit primaire de l'enroulement primaire (4a) ou d'un courant détecté dans le circuit secondaire de l'enroulement secondaire (4b,c).

8. Dispositif de soudage par résistance selon la revendication 6 ou 7, dans lequel l'excitation des branches de redresseur (3a,b) est effectuée à une fréquence se situant dans la plage de 1 kHz à 20 kHz, notamment dans la plage allant de 1 kHz à 10 kHz.

9. Dispositif d'excitation, notamment circuit intégré, destiné à mettre en fonctionnement un dispositif de soudage par résistance comportant un transformateur de soudage qui comprend des premier et second enroulements secondaires (4b,c) couplés l'un à l'autre et un enroulement primaire (4a) ainsi qu'un redresseur synchrone qui comprend des première et seconde branches de redresseur (3a, 3b), qui est respectivement excité au moyen des premier et second enroulements secondaires (4b,c) et qui alimente en courant de soudage des première et seconde électrodes de soudage (5a,b), dans lequel chaque branche de redresseur (3a, 3b) comprend un transistor, dans lequel le dispositif d'excitation est réalisé de manière à exciter les transistors du redresseur synchrone (3a, 3b) afin que la branche de redresseur (3a,b) excitée en tenant compte du sens d'enroulement des enroulements correspondant les uns aux autres du circuit primaire (4a) et du circuit secondaire (4b,c), ne soit toujours excitée par la polarité des électrodes de soudage (5a,b) réglées en sens opposé à l'excitation actuelle que lorsque l'enroulement primaire (4a) est excité.
